Europäisches Patentamt

European Patent Office

Office européen des brevets

(19)

(11) **EP 1 028 924 B1**

(12) **FASCICULE DE BREVET EUROPEEN**

(45) Date de publication et mention
de la délivrance du brevet:
**02.04.2003 Bulletin 2003/14**

(21) Numéro de dépôt: **97913270.1**

(22) Date de dépôt: **06.11.1997**

(51) Int Cl.⁷: $C04B\ 7/32$

(86) Numéro de dépôt international:
**PCT/FR97/01998**

(87) Numéro de publication internationale:
**WO 99/024376 (20.05.1999 Gazette 1999/20)**

(54) **PROCEDE ET INSTALLATION DE FABRICATION DE CIMENT ALUMINEUX ET CIMENT ALUMINEUX**

VERFAHREN UND VORRICHTUNG ZUR HERSTELLUNG VON TONERDEZEMENT UND TONERDEZEMENT

METHOD AND PLANT FOR MAKING ALUMINA CEMENT AND ALUMINA CEMENT

(84) Etats contractants désignés:
**AT BE CH DE DK ES FI FR GB GR IE IT LI LU MC NL PT SE**

(43) Date de publication de la demande:
**23.08.2000 Bulletin 2000/34**

(73) Titulaire: **Lafarge Aluminates
75782 Paris Cedex 16 (FR)**

(72) Inventeurs:
• **ESPINOSA, Bruno
F-69740 Genes (FR)**
• **BIER, Thomas
F-78580 Herveville (FR)**

(74) Mandataire: **Michelet, Alain et al
Cabinet Harlé et Phélip,
7, rue de Madrid
75008 Paris (FR)**

(56) Documents cités:
**DD-A- 233 836**      **DE-A- 2 152 410**
**DE-B- 2 649 032**      **GB-A- 2 033 369**
**US-A- 1 643 137**

• **BENSTED J: "HIGH ALUMINA CEMENT - PRESENT STATE OF KNOWLEDGE" ZKG INTERNATIONAL, vol. 46, no. 9, 1 septembre 1993, pages 560-566, XP000413607**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 028 924 B1

## Description

La présente invention concerne un procédé et une installation de fabrication de ciment alumineux et ciment alumineux.

Le ciment alumineux est traditionnellement fabriqué à partir d'un mélange initial de bauxite et de calcaire. Les composants de ce mélange sont parfois concassés et broyés puis homogénéisés. Cela dépend du type de four utilisé.

La composition d'enfournement ainsi obtenue est cuite à une température élevée, de l'ordre de 1500 degrés, dans un four pour former le clinker.

Ce clinker est ensuite broyé, des constituants secondaires lui étant éventuellement adjoints pour former le ciment qui est ensuite acheminé sur son lieu d'utilisation.

On sait que le clinker produit pour la fabrication de ciment alumineux comporte de l'oxyde d'alumine $Al_2O_3$, représenté dans la notation abrégée cimentière par A, et de la chaux CaO représentée dans cette même notation abrégée cimentière par C. Cette notation sera utilisée par la suite lorsqu'elle facilite la lecture de ce texte. L'oxyde d'alumine et la chaux sont partiellement cristallisés sous la forme $C_{12}A_7$ d'une part et sous la forme CA d'autre part.

Selon la nature du mélange initial, le ciment alumineux est plus ou moins ferrugineux.

Le ciment alumineux est considéré dans la chimie du bâtiment comme une matière première qui, associée à d'autres composants, permet la réalisation de produits prêts-à-l'emploi utilisés comme béton, mortier, colle, liant et enduit pour la fabrication de dalles ou d'objets coulés, ou encore plus généralement pour tout béton, mortier ou enduit.

La recherche de l'amélioration des qualités des produits prêts-à-l'emploi conduit à la formulation de produits associant au ciment alumineux, de la chaux, du ciment Portland, du sulfate de calcium, ainsi qu'un certain nombre d'additifs ou d'adjuvants.

Il est également apparu que la qualité des produits prêts-à-l'emploi dépend fortement des propriétés et de la qualité du ciment alumineux.

Un ciment alumineux optimisé permet d'allonger l'ouvrabilité d'un mortier, ainsi que d'en augmenter sa fluidité, tout en maintenant une cinétique de durcissement très rapide. Cela revient à dire que le produit prêt-à-l'emploi utilisant ce type de ciment sera applicable pendant un temps plus long, mais qu'il atteindra ses performances finales au moins aussi rapidement.

Les propriétés des ciments alumineux sont plus particulièrement exprimées par les temps de début de prise DP, de fin de prise FP, l'étalement en pourcentage, la résistance à 6 heures et la résistance à 24 heures.

Le but de l'invention est donc la réalisation d'un ciment alumineux spécifique dont les propriétés permettent la réalisation de produits prêts-à-l'emploi de haute qualité.

A cet effet, l'invention concerne un procédé de fabrication de ciment alumineux tel que défini plus haut dans lequel la concentration $d_3$ en alumine $Al_2O_3$, -A-, et la concentration $d_4$ en chaux CaO, -C-, dans le mélange initial sont telles que $d_3/d_4$ est compris entre 1,15 et 1,40, et le broyage produit un ciment dont la granulométrie, représentée dans un diagramme de Rosin Rammler, a une pente comprise entre 0,75 et 0,90.

L'association des propriétés minéralogiques de la composition initiale et des propriétés chimiques des clinkers à une répartition granulométrique particulière permet d'atteindre les résultats escomptés et en améliorant les propriétés du ciment alumineux d'obtenir des produits prêts-à-l'emploi de qualité supérieure.

Le contrôle de la concentration relative en alumine $d_3$ et en chaux $d_4$ dans le mélange initial, le rapport de ces concentrations $d_3/d_4$ étant compris entre 1,15 et 1,40 et la cuisson étant réalisée sous une atmosphère oxydante, permettent d'obtenir une faible concentration de $C_{12}A_7$ dans le clinker.

L'invention concerne également une installation de fabrication de ciment alumineux permettant la mise en oeuvre du procédé défini plus haut. La réalisation de la cuisson sous atmosphère oxydante lorsqu'elle est retenue, pouvant être réalisée dans un four réverbère, dans un four tournant ou encore dans un four électrique. Au contraire, les conditions usuelles de cuisson sont des conditions réductrices conduisant à un taux élevé de $C_{12}A_7$.

L'invention concerne encore un ciment alumineux dans lequel les concentrations $d_3$ de A et $d_4$ de C sont telles que $d_3/d_4$ est compris entre 1,15 et 1,40, et dont la granulométrie, représentée dans un diagramme de Rosin Rammler, a une pente comprise entre 0,75 et 0,90.

La finesse Blaine du ciment est de préférence comprise entre 2000 et 5000 $cm^2/g$, avantageusement de l'ordre de 3500 $cm^2/g$.

Différents modes de réalisation de l'invention seront décrits ci-après en détail en référence aux exemples et aux Figures annexées dans lesquelles :

- la Figure 1 est une représentation très schématique d'un procédé de fabrication de ciment alumineux ;
- la Figure 2 est une représentation schématique d'un four de cuisson réverbère ;
- la Figure 3 est une représentation schématique des conditions de fonctionnement du four réverbère de la Figure 2 ;
- la Figure 4 est une représentation schématique d'un broyeur de clinker ;

- la Figure 5 est une représentation schématique de l'appareil mis en oeuvre pour la détermination de la finesse du ciment par perméabilité à l'air (méthode Blaine) ;
- la Figure 6 est un exemple de représentation des résultats d'une analyse granulométrique dans un diagramme de Rosin Rammler.

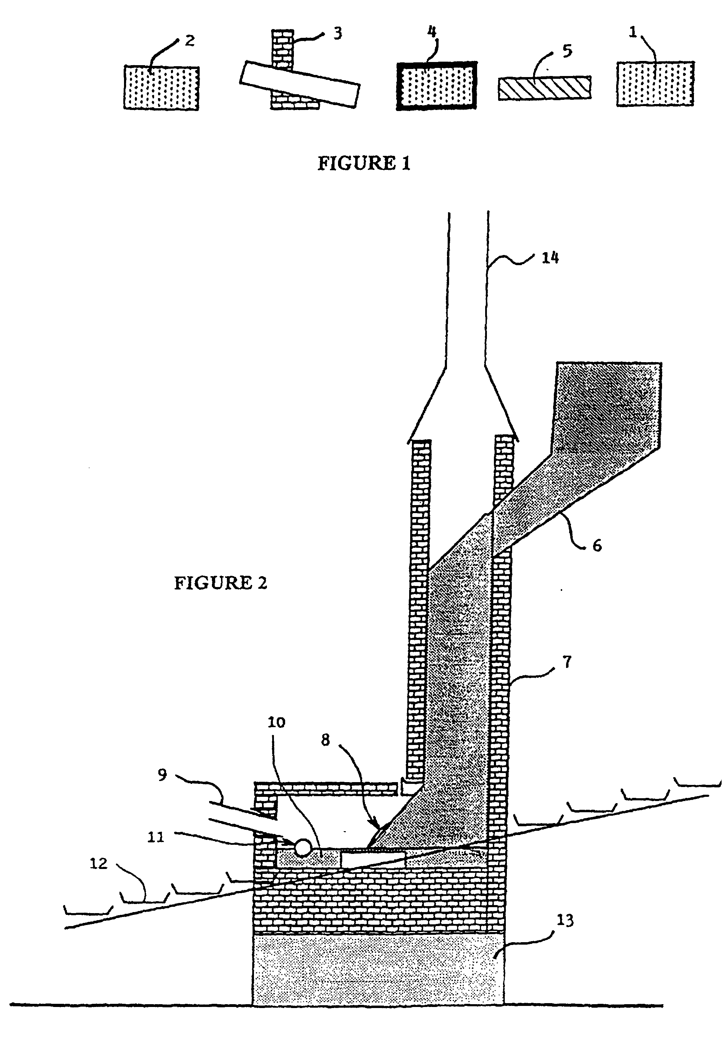

De manière classique telle que représentée sur la Figure 1, un ciment alumineux 1 est obtenu à partir d'un stock de matières premières 2 constitué essentiellement d'un mélange de bauxite et de calcaire éventuellement concassés, soumis à une cuisson dans un four 3. Le clinker obtenu est stocké dans un stockage 4, puis broyé par le broyeur 5.

Ce procédé de fabrication est donné à titre indicatif, les procédés de fabrication de ciment alumineux par frittage pouvant également donner satisfaction.

Le four 3 est avantageusement un four réverbère tel que représenté sur la Figure 2. Les matières premières constituant le crû provenant du stock 2 sont chargées dans la trémie d'alimentation 6 à la partie supérieure de l'élément vertical 7 du four. Le crû forme ainsi un talus 8 qui est porté à une température élevée de l'ordre de 1500 degrés par la tuyère 9 et donne naissance à la coulée 10 qui est évacuée par le bec 11 dans les lingotières 12. Le four repose sur un massif en béton 13 et les fumées sont évacuées par la cheminée 14.

Le four réverbère a été décrit en détail à titre d'exemple. Toutefois, on peut obtenir des résultats analogues et contrôler les mêmes paramètres en utilisant tout autre four tel que, par exemple, un four tunnel ou un four électrique, qu'il soit à induction ou à arc électrique.

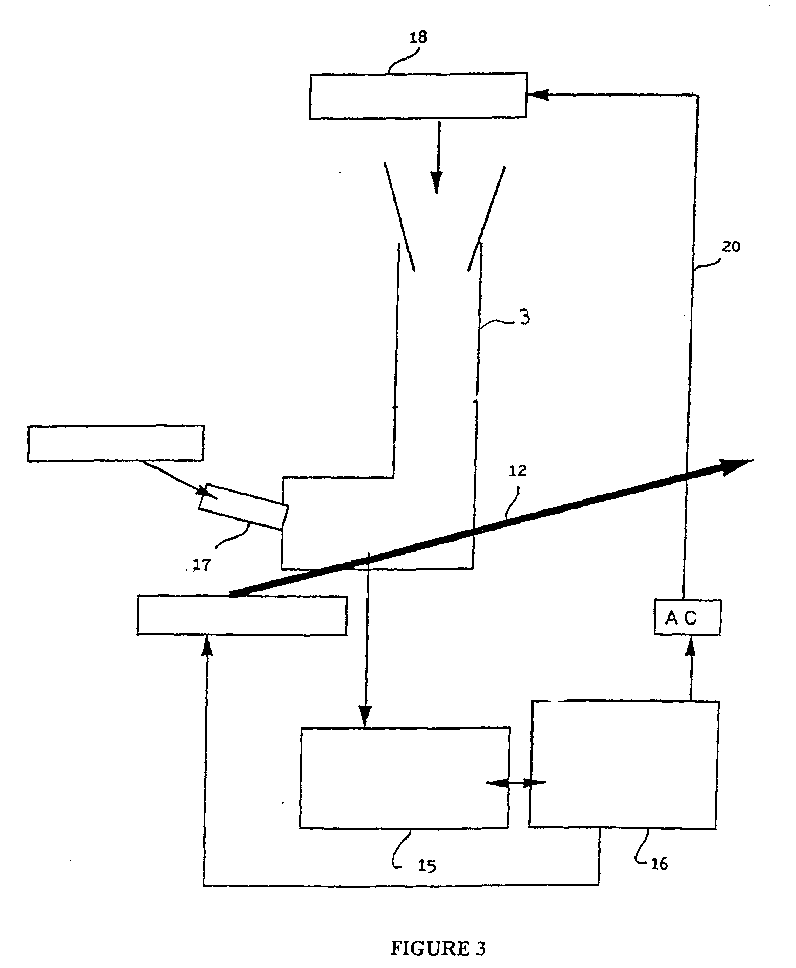

Le fonctionnement du four est plus particulièrement représenté sur le diagramme de la Figure 3. La qualité du clinker obtenu est contrôlée par des analyses rhéologiques symbolisées en 15 et des analyses chimiques et minéralogiques symbolisées en 16. Une analyse par fluorescence X permet de suivre le rapport de la concentration en alumine $d_3$ par rapport à la concentration $d_4$ en chaux dans le clinker. Cette concentration est contrôlée en modifiant, lorsque cela est nécessaire, la composition des matières premières (du crû).

On réalise ainsi une boucle de régulation 20 permettant le contrôle de la composition chimique des clinkers.

Il a été montré que le maintien d'un rapport de concentrations $d_3/d_4$ compris entre 1,15 et 1,40 maintient le rapport des concentrations en $C_{12}A_7$ $d_1$ et en CA $d_2$ à une valeur $d_1/d_2$ inférieure à 0,09.

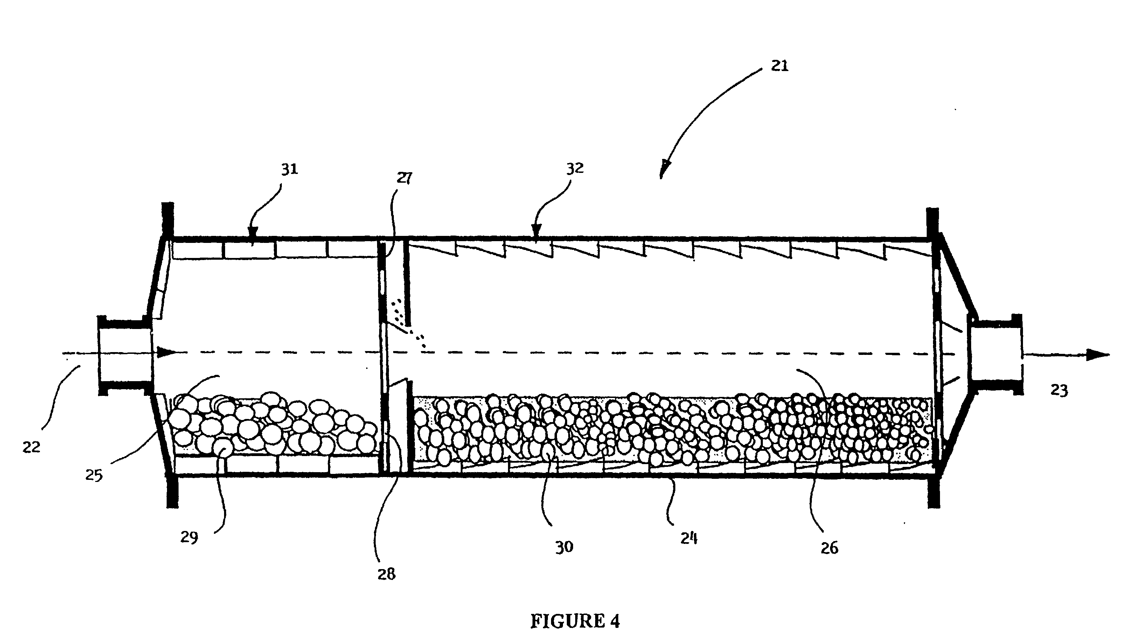

Le broyeur 5 est représenté de manière détaillée sur la Figure 4, ses conditions de fonctionnement permettent le contrôle de la granulométrie.

Ce broyeur 21 comporte une entrée 22 et une sortie 23.

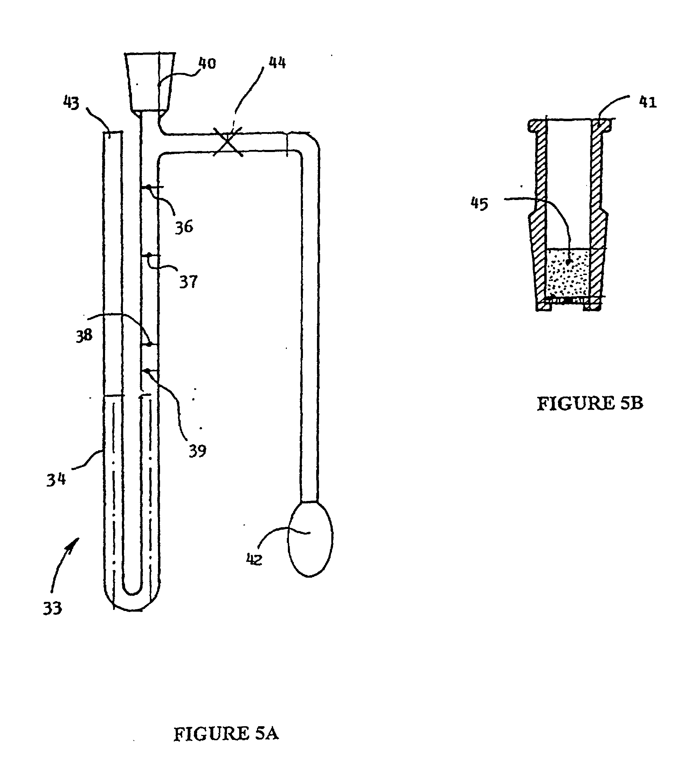

Le tube 24 du broyeur est un cylindre de tôle épaisse divisé dans sa longueur en chambres dont deux ont été représentées sur la Figure 5 : la chambre 25 et la chambre 26. Les chambres sont séparées par des cloisons 27 percées de fentes 28 permettant de retenir la charge broyante et de laisser passer la matière lorsque celle-ci est suffisamment broyée.

La charge broyante est constituée de boulets sphériques 29, 30 et les parois du tube broyeur portent des blindages releveurs 31 ou classants 32. La granulométrie de la charge obtenue dépend du diamètre des boulets 29, 30, du nombre de chambres 25, 26, ainsi que des cloisons 27 et de leur fente 28 et du coefficient de remplissage du broyeur.

Le broyage produit une augmentation de la surface totale des grains et la mesure de cette surface constitue souvent un critère significatif d'évaluation du degré de broyage.

La mesure exacte de cette surface n'étant pas envisageable, elle est généralement approchée par une mesure de la surface spécifique Blaine exprimée en $cm^2/g$. Cette méthode fait l'objet de la norme française homologuée NF-EN-196-6 de Août 1990.

La finesse du ciment est mesurée sous forme de surface massique, exprimée en $cm^2$ par gramme, en ob-servant le temps mis par une quantité d'air fixée pour traverser un lit de ciment compacté à des dimensions et une porosité spécifiques.

La surface massique du ciment est proportionnelle à $\sqrt{t}$ où t est le temps nécessaire à une quantité d'air donnée pour traverser le lit de ciment compacté.

L'appareil permettant cette mesure est représenté sur la Figure 5-A. Un manomètre 33 est formé de tubes en verre 34 portant des repères gravés 36, 37, 38 et 39. La partie supérieure du manomètre comporte un logement 40, intérieurement rodé et destiné à recevoir la cellule 41 représentée sur la Figure 5-B. Une poire 42 permet d'établir une dépression entre l'ouverture 43 du manomètre à la pression atmosphérique et la base de la cellule. Cette dépression mesurée par référence aux repères gravés peut être maintenue grâce à un robinet 44.

Lors de la réalisation de la mesure, on forme un lit de ciment compacté 45, parfaitement défini, à l'intérieur de la cellule 41. Cette cellule est mise en place dans le logement 40 du manomètre 33. Une dépression définie et établie par la poire 42 est maintenue par action du robinet 44.

La mesure du temps nécessaire pour obtenir le retour à un équilibre des pressions entre les deux branches du manomètre est caractéristique de la finesse du ciment.

Cette méthode de mesure de la finesse a été décrite ici succinctement et il convient de se reporter à la norme mentionnée plus haut qui fournira toutes les caractéristiques de l'appareillage et du processus opératoire.

La surface spécifique Blaine SSB est ici comprise entre 2000 et 3000 $cm^2$/g.

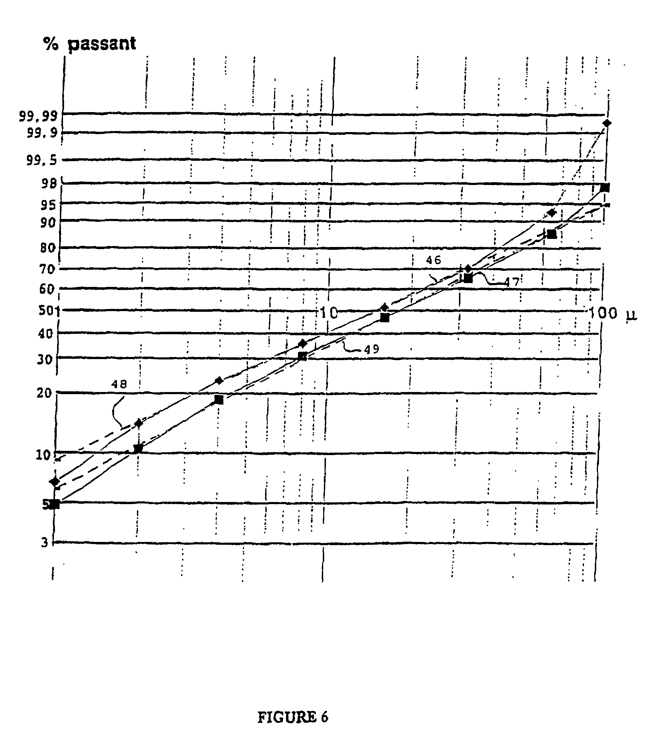

La représentation des distributions granulométriques des ciments est souvent faite sur un diagramme de Rosin Rammler défini par la norme X 11-635, tel que celui représenté sur la Figure 6 et qui est une représentation en coordonnée bilogarithmique.

Il est connu que la distribution granulométrique obéit d'après certaines théories, à une loi exponentielle : Le refus R(x) pour un diamètre x donné est R(x) = 1 - P(x) où,

$$P(x) = 1 - exp\ [-(x/x_o)^n]$$

où $x_o$ est un paramètre de dimension qui correspond à la valeur de x pour laquelle P = 1-1/e.

On obtient une équation linéaire à partir de cette distribution granulométrique en prenant les logarithmes des deux termes de cette équation, puis de nouveau les logarithmes de ces logarithmes. On obtient ainsi : log (- log (1 - P(x))) = n (log x - log $x_o$) + log (log e)

Ainsi, la distribution granulométrique est représentée par la valeur de la pente de cette droite.

Selon l'invention, cette pente est comprise entre 0,75 et 0,90.

De plus, la finesse du ciment obtenu après broyage est caractérisée par le taux de rejet à 90 µm, c'est-à-dire le pourcentage en masse de particules ayant un diamètre supérieur à cette valeur.

Le contrôle de la granulométrie est fait par la mesure, en laboratoire, d'échantillons prélevés lors de la fabrication.

Selon le résultat de ces mesures, on agit sur le temps de broyage, le taux de remplissage du broyeur et, de manière plus générale, sur les paramètres du broyeur.

Un apport important de la présente invention a d'abord fait apparaître qu'un ciment alumineux de qualité est obtenu non seulement par ces propriétés chimiques ou minéralogiques, mais également par un contrôle et une optimisation de la granulométrie.

Le rapport $d_3/d_4$ et les conditions de la cuisson définissent la composition chimique. Elle permet une meilleure stabilité de la consistance avant la prise dans les produits prêts-à-l'emploi et favorise l'ouvrabilité du mortier.

Sans que l'invention ne puisse être limitée par cette explication, on peut supposer que la granulométrie qui détermine la surface apparente du ciment, en contact avec l'eau lors de son utilisation, agit également sur les conditions de durcissement et d'ouvrabilité. La combinaison des propriétés minéralogiques ou chimiques du ciment et de ses propriétés granulométriques permet l'obtention d'un résultat exceptionnel.

Différentes méthodes de mesures normalisées permettent de quantifier le durcissement, en particulier les temps de début et de fin de prise. On a utilisé ici la méthode, objet de la norme française homologuée NF-EN-196-3 de Mars 1990, connue sous le nom de méthode Vicat.

Les mesures d'étalement ont été faites conformément à la norme ASTM-C230-90.

Une certaine quantité de mortier normalisé est déposée sur un plateau calibré sousmis un certain nombre (25) de chocs. On mesure l'étalement du ciment après ces chocs. L'ensemble des paramètres de cet appareil sont dûment spécifiés dans la norme mentionnée plus haut et cet appareil est calibré.

EXEMPLES

Les exemples ci-après, dans lesquels des échantillons conformes à l'invention sont comparés à des échantillons de l'art antérieur, confirment une amélioration de l'étalement et de la résistance finale des produits obtenus selon l'invention, alors que les temps de début de prise et de fin de prise sont approximativement maintenus, par comparaison aux produits de l'art antérieur.

| | Art antérieur | | | Invention | | |
|---|---|---|---|---|---|---|
| | Ech. 1 | Ech. 2 | Ech. 3 | Ech. 4 | Ech. 5 | Ech. 6 |
| $d_3/d_4$ | 1,2 | 1,06 | 1,01 | 1,24 | 1,40 | 1,05 |
| FeO % | 2,5 | 1,2 | 2,1 | 4,5 | 4,74 | 0,86 |
| Rejet 90 µm | 7 | 7,2 | 2,4 | 3 | 2,7 | 3,1 |
| Pente Ramler | 0,72 | 0,70 | 0,80 | 0,80 | 0,85 | 0,86 |

(suite)

| | Art antérieur | | | Invention | | |
|---|---|---|---|---|---|---|
| | Ech. 1 | Ech. 2 | Ech. 3 | Ech. 4 | Ech. 5 | Ech. 6 |
| Finesse Blaine | 3160 | 3260 | 3426 | 3182 | 3135 | 3800 |
| TP : DP/FP | 250/290 | 180/240 | 150/180 | 200/240 | 205/295 | 200/230 |
| Etalement % | 100 | 100 | 60 | > 150 | 150 | >150 |
| Résist 6 h | 22 | 42 | 46 | 48 | 21 | 45 |
| Résist 24 h | 52 | 68 | 57 | 60 | 60 | 75 |

**Revendications**

1.  Procédé de fabrication de ciment alumineux dans lequel une composition d'enfournement est réalisée, à partir d'un mélange initial comportant essentiellement de la bauxite et du calcaire, ladite composition étant cuite dans un four pour former un clinker comportant de l'oxyde d'alumine $Al_2O_3$, -A-, et de la chaux CaO, -C- partiellement sous la forme $C_{12}A_7$ d'une part et sous la forme CA d'autre part, ledit clinker étant ensuite broyé avec d'éventuels constituants secondaires pour former le ciment,
    **caractérisé en ce que** la concentration $d_3$ en alumine $Al_2O_3$, -A-, et la concentration en chaux CaO, -C-, dans le mélange initial sont telles que $d_3/d_4$ est compris entre 1,15 et 1,40, et que le broyage produit un ciment dont la granulométrie représentée dans un diagramme de Rosin Rammler a une pente comprise entre 0,75 et 0,90.

2.  Procédé selon la revendication 1, **caractérisé en ce que** la finesse Blaine du ciment est comprise entre 2000 et 5000 $cm^2$/g.

3.  Procédé selon la revendication 1, **caractérisé en ce que** la finesse Blaine du ciment est de l'ordre de 3500 $cm^2$/g.

4.  Procédé selon l'une quelconque des revendications 1 à 3, **caractérisé en ce que** le four est un four réverbère.

5.  Procédé selon l'une quelconque des revendications 1 à 3, **caractérisé en ce que** le four est un four électrique.

6.  Ciment alumineux comportant de l'oxyde d'alumine $Al_2O_3$, -A-, et de la chaux CaO, -C-, la concentration $d_3$ en alumine $Al_2O_3$, -A-, et la concentration $d_4$ en chaux CaO, -C-, dans le mélange initial sont telles que $d_3/d_4$ est compris entre 1,15 et 1,40, et que sa granulométrie représentée dans un diagramme de Rosin Rammler a une pente comprise entre 0,75 et 0,90.

**Claims**

1.  A method of making alumina cement in which a batch composition is obtained, from an initial mixture comprising substantially bauxite and limestone, the said composition is baked in a furnace in order to form a clinker containing alumina oxide $Al_2O_3$, -A-, and lime CaO, -C-, partially as $C_{12}A_7$ on the one hand and as CA on the other, whereas the said clinker is then ground with other possible secondary constituents to form the cement,
    **characterised in that** the concentration d3 in alumina $Al_2O_3$, -A- and the concentration d4 in lime CaO, -C- in the initial mixture are such that d3/d4 ranges between 1.15 and 1.40, and grinding produces a cement whose size distribution as represented in a Rosin Rammler diagram has a gradient ranging between 0.75 and 0.90.

2.  A method according to claim 1, **characterised in that** the Blaine fineness of the cement ranges between 2,000 and 5,000 $cm^2$/g.

3.  A method according to claim 1, **characterised in that** the Blaine fineness of the cement is about 3,500 $cm^2$/g.

4.  A method according to any one of claims 1 to 3, **characterised in that** the furnace is a reverberatory furnace.

5.  A method according to any one of claims 1 to 3, **characterised in that** the furnace is an electrical furnace.

6. An alumina cement comprising alumina oxide $Al_2O_3$, -A-, and lime CaO, -C-, wherein the concentration d3 in alumina $Al_2O_3$, -A- and the concentration d4 in lime CaO, -C- in the initial mixture are such that d3/d4 ranges between 1.15 and 1.40, and its size distribution represented in a Rosin Rammler diagram has a gradient ranging between 0.75 and 0.90.

**Patentansprüche**

1. Verfahren zur Herstellung von Tonerdezement, wobei eine Beschickungszusammensetzung hergestellt wird, ausgehend von einem Anfangsgemisch, das im Wesentlichen Bauxit und Kalkstein umfasst, wobei die Zusammensetzung in einem Ofen gebrannt wird, um einen Klinker zu bilden, der Aluminiumoxid $Al_2O_3$ (A) und Kalk CaO (C), partiell in Form von $C_{12}A_7$ einerseits und in Form von CA andererseits umfasst, wobei der Klinker anschließend mit wahlfreien sekundären Bestandteilen unter Bildung des Zements gemahlen wird;
**dadurch gekennzeichnet, dass** die Konzentration $d_3$ an Aluminiumoxid $Al_2O_3$ (A) und die Konzentration $d_4$ an Kalk CaO (C) im Anfangsgemisch so groß sind, dass $d_3/d_4$ zwischen 1,15 und 1,40 liegt und dass beim Mahlen ein Zement entsteht, dessen in einem Diagramm nach Rosin-Rammler dargestellte Korngrößenverteilung eine Steigung zwischen 0,75 und 0,90 hat.

2. Verfahren gemäß Anspruch 1, **dadurch gekennzeichnet, dass** die Blaine-Feinheit des Zements zwischen 2000 und 5000 cm$^2$/g liegt.

3. Verfahren gemäß Anspruch 1, **dadurch gekennzeichnet, dass** die Blaine-Feinheit des Zements in der Größenordnung von 3500 cm$^2$/g liegt.

4. Verfahren gemäß einem der Ansprüche 1 bis 3, **dadurch gekennzeichnet, dass** der Ofen ein Flammofen ist.

5. Verfahren gemäß einem der Ansprüche 1 bis 3, **dadurch gekennzeichnet, dass** der Ofen ein Elektroofen ist.

6. Tonerdezement, der Aluminiumoxid $Al_2O_3$ (A) und Kalk CaO (C) umfasst, wobei die Konzentration $d_3$ an Aluminiumoxid $Al_2O_3$ (A) und die Konzentration $d_4$ an Kalk CaO (C) im Anfangsgemisch so groß sind, dass $d_3/d_4$ zwischen 1,15 und 1,40 liegt, und seine in einem Diagramm nach Rosin-Rammler dargestellte Korngrößenverteilung eine Steigung zwischen 0,75 und 0,90 hat.

FIGURE 1

FIGURE 2

FIGURE 3

FIGURE 4

FIGURE 5A

FIGURE 5B

FIGURE 6